# EUROPEAN PATENT SPECIFICATION

(11) **EP 0 676 448 B1**
(45) Date of publication and mention of the grant of the patent: **10.03.1999**
(21) Application number: 95302320.7
(22) Date of filing: 07.04.1995
(51) Int. Cl.: C08L 63/00, C08L 83/04, C08K 3/00

(54) **Epoxy resin composition and resin molding using the same**
Epoxydharzzusammensetzung und Formmassen daraus
Composition de résine époxyde et massé à mouler la contenant

(30) Priority: 08.04.1994 JP 70763/94
(43) Date of publication of application: 11.10.1995
(73) Proprietor: KABUSHIKI KAISHA TOSHIBA, Kawasaki-shi, Kanagawa-ken 210-8572 (JP)
(72) Inventor: Kamino, Miwa, c/o Intellectual Prop. Div., Tokyo (JP); Shimizu, Toshio, c/o Intellectual Prop. Div., Tokyo (JP); Miyagawa, Masaru, c/o Intellectual Prop. Div., Tokyo (JP); Tagaya, Osamu, c/o Intellectual Prop. Div., Tokyo (JP); Nagata, Takafumi, c/o Intellectual Prop. Div., Tokyo (JP); Kida, Shinji, c/o Toshiba Silicone Co., Ltd., Tokyo (JP); Nishiwaki, Nobuyuki, c/o Toshiba Silicone Co., Ltd, Tokyo (JP)
(74) Representative: BATCHELLOR, KIRK & CO.

(56) References cited:
- EP-A- 0 230 619
- EP-A- 0 360 461
- EP-A- 0 385 736
- EP-A- 0 553 371
- US-A- 4 401 775

## Description

### Field of the Invention

This invention relates to an epoxy resin composition and a resin molding using the same, and more particularly to an epoxy resin composition and a resin molding using the epoxy resin composition for high-voltage insulation in which a component such as a vacuum interruptor, a conductor and an embedded metal is buried.

### Description of the Related Art

In heavy apparatus, resin moldings are widely used for electrically insulating parts and structural parts. Epoxy resin is normally used as the resin in such resin moldings on account of its excellent resistance to humidity, resistance to chemicals, dimensional stability and electrical properties.

Resin moldings are produced by processes such as compression molding and casting. Compression molding is a method in which the resin is put into a mold in a semi-solid state when the reaction has progressed to some extent, is heated and pressurized to give the desired shape. This method is used when mass production is required because the curing time is short. Casting, on the other hand, is a method in which the resin, hardner and filler are heated and mixed, the resulting liquid mixture is degassed under reduced pressure and injected into the mold and then cured to give the desired shape. This method is able to produce resin moldings with few bubbles inside the molding and with outstanding electrical properties.

However, when they are subjected to rapid changes in temperature, resin moldings which have been compression molded or casted with components such as metal inserts or vacuum interruptors buried in the epoxy resin are unable to withstand thermal stresses which arise due to the differences between the thermal expansion coefficients of the resin and the metal or ceramic because epoxy resins are brittle. As a result, there is a risk that resin moldings may be fractured.

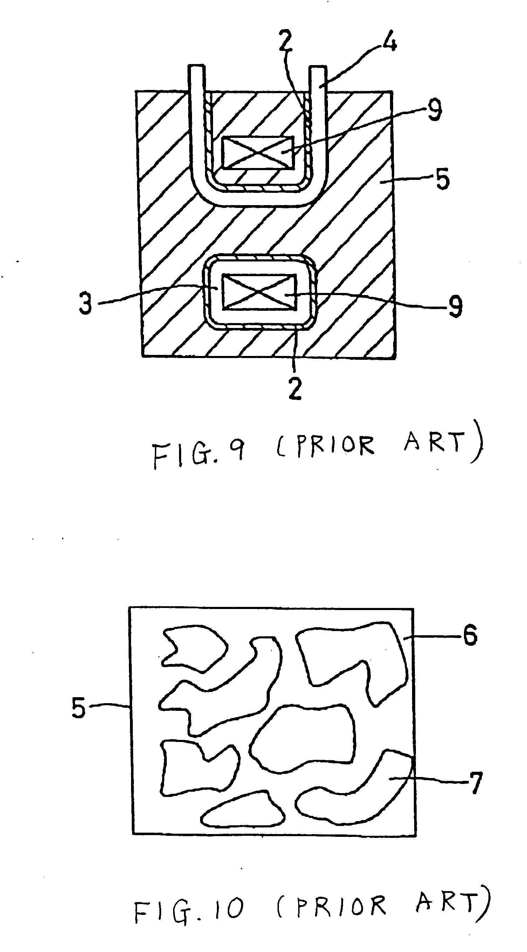

There are cases in which a two-stage molding method, as shown in Fig. 8 and Fig. 9, is adopted to prevent this. In this method, in the case of the vacuum interruptor molding shown in Fig. 8 for example, a thin cushioning layer 2 consisting of a soft urethane rubber or a flexible epoxy resin is provided around a vacuum interruptor 1 with the aim of cushioning the thermal stress. Then, compression molding or casting is carried out using an epoxy resin 5 filled with an inorganic filler such as silica. Furthermore, in the case of a potential transformer (PT) having an insert of a metal portion, as shown in Fig. 9, a two-stage molding method is adopted in which a thin soft cushioning layer 2 is similarly provided around a primary coil 3 and a secondary coil 4.

Here, in Fig. 9, 9 is iron core. Thus, in the two-stage molding method in which molding is carried out using an epoxy resin after providing a cushioning layer, thermal stresses caused at the interface thereof are buffered and absorbed with the thin and soft cushioning layer 2 provided around the metal portion. As a result, the resin molding is prevented from fracturing. Furthermore, the hard casting material 5 whose main component is epoxy resin which is provided outside cushioning layer 2 has the function of maintaining the mechanical strength and electrical properties and the like of the resin molding.

Meanwhile, in other methods for reducing thermal stress, as used in the sealing materials for electronics elements such as ICs, there is a method of molding using resin in which an epoxy resin is filled with large amounts of silica flour and the thermal expansion coefficient of the resin is brought close to that of the metal or ceramic used in the element so that thermal stress is not liable to occur. In this case, however, it is known that large amounts of filler have to be included in the resin and the viscosity of the resin therefore becomes very high.

Given this situation, particularly when producing resin moldings for heavy apparatus for high voltage uses such as 10 kV and above, high-viscosity resins such as those used for sealing materials are not employed. The reasons are that bubbles and other extraneous materials have to be removed because their inclusion detracts from the electrical properties, and that high voltage components have to be provided with parts in complicated shapes such as fins which are indispensable for radiating heat and the like. Instead the resin moldings for heavy apparatus are made by casting using liquid epoxy resins which are capable of degassing under reduced pressure, have a viscosity lowered to a certain extent, and which can penetrate easily into the mold even though the shape may be complicated.

However, there are the following disadvantages when resin moldings are made by casting using a liquid epoxy resin. Namely, when there are temperature differences between the inside of the machine and the outside while running and when there is a heat cycle of running/stopping, substantial heat stresses are set up by the difference between their thermal expansion coefficients at the interface of the resin and the metal portion or ceramic portion of a component such as a vacuum interruptor inside the resin molding. As a result, interface separation occurs inside the resin molding, and in epoxy resins with low toughness cracking occurs. Therefore, the electrical properties such as the partial discharge properties are impaired and the occurred cracks are propagated and the resin molding finally fractures.

When a two-stage molding method is adopted, on the other hand, casting is carried out using an epoxy resin after thinly coating and curing polyurethane around the metal insert. However, it is difficult to bond integrally the epoxy resin molding and the polyurethane cushioning layer once cured, and new interfaces are formed between the two. Thus, although some improvement is seen in thermal buffering, there is the problem that separation occurs at the interface between the cushioning layer and the epoxy resin where the bond is weak, and the electrical properties such as the resistance to partial discharge are impaired.

Similarly, when using a flexible, low-hardness epoxy resin as the cushioning layer and then carrying out molding with a normal epoxy resin, there is the disadvantage that it is not possible to prevent the impairment in the electrical properties due to the debonding at the interface, or cracking due to the brittleness of the flexible epoxy resin at low temperatures. Additionally, as a problem in production, there is the disadvantage that such two-stage molding methods are less workable than direct molding methods.

### SUMMARY OF THE INVENTION

Accordingly, one object of this invention is to provide an epoxy resin composition which can be used by direct molding for making a resin molding.

Another object of this invention is to provide an epoxy resin composition which can be used by direct molding for making a resin molding having an improved property in respect of brittleness.

Still another object of this invention is to provide an epoxy resin composition which can be used by direct molding for making a resin molding with an improved workability.

Another object of this invention is to provide a resin molding directly molded using this epoxy resin composition which has an improved cracking resistance, an improved long-term reliability and outstanding electrical properties.

A further object of this invention is to provide a resin molding which can be directly molded using this epoxy resin composition with an improved workability.

These and other objects of this invention can be achieved by providing an epoxy resin composition including an epoxy resin, an inorganic filler, a soft resin and a compatibilizer. Particles of the inorganic filler and the soft resin are uniformly dispersed in the form of fine particles in the epoxy resin, the soft resin having a particle size from 0.01 to 1 µm.

According to one aspect of this invention there can be provided a resin molding including an epoxy resin composition and a component buried in the epoxy resin composition. The epoxy resin composition includes an epoxy resin, an inorganic filler, a soft resin and a compatibilizer as defined above. Particles of the inorganic filler and the soft resin are uniformly dispersed in the form of fine particles in the epoxy resin.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 is a diagram showing the constitution of an epoxy casting material according to this invention wherein silica and silicone gel are microdispersed in epoxy resin;
Fig. 2 is a cross-sectional view showing the constitution of a resin molding according to an embodiment of this invention wherein a vacuum interruptor is directly molded by means of the epoxy casting material;
Fig. 3 is a graph showing the relationship between temperature and viscosity of the epoxy casting materials;
Fig. 4 is a graph showing the relationship between added amount of silicone gel in the epoxy casting material and fracture toughness of the resin molding;
Fig. 5 is a graph showing the relationship between added amount of silicone oil in the epoxy casting material and fracture toughness of the resin molding;
Fig. 6 is a graph showing the relationship between added amount of silicone oil and particle diameter of the silicone gel in the epoxy casting material;
Fig. 7 is a cross-sectional view showing the constitution of a resin molding according to another embodiment of this invention wherein a potential transformer (PT) is directly molded by epoxy casting material;
Fig. 8 is a cross-sectional view showing the constitution of a conventional resin molding wherein a vacuum interruptor is molded by conventional epoxy casting material;
Fig. 9 is a cross-sectional view showing the constitution of a conventional resin molding wherein a potential transformer (PT) is molded by conventional epoxy casting material; and
Fig. 10 is a diagram showing the constitution of a conventional epoxy casting material consisting of silica and epoxy resin.

### DETAILED DESCRIPTION OF THE PREFERRED EMBODIMENTS

Referring now to the drawings, wherein like reference numerals designate identical or corresponding parts throughout the several views, the embodiments of this invention will be described below.

Various methods for directly molding metal inserts without forming a cushioning layer as in the two-stage molding method, have been investigated because molding is completed in a single operation, workability is improved, and problems such as debonding and cracking occurring at the interface between the cushioning layer and the epoxy resin are also solved.

Regarding the properties which are required of a resin capable of direct molding, the resin has to have improved brittleness and outstanding resistance to cracking. Methods of improving the brittleness are to fill the resin with large amounts of inorganic filler and to introduce a functional group into the epoxy resin. However, if the epoxy resin is filled with large amounts of inorganic fillers such as silica flour or alumina flour, there is a marked increase in viscosity and the workability is impaired. There are therefore limits to the amount of inorganic filler to be filled. Furthermore, when functional groups are introduced, there is a risk that the mode of the reaction in the curing of the epoxy resin may change.

In order to overcome the problems mentioned above, the present inventors have diligently investigated epoxy resins for compression molding or casting (referred to as "epoxy casting materials" hereinbelow) having outstanding long-term reliability and electrical properties even when directly molded. As a result, they arrived at the present invention upon discovering that the thoughness of epoxy casting materials can be improved by dispersing a soft resin such as a silicone gel in the form of fine particles (0.01 to 1 µm) in an epoxy resin, which is to say by microdispersing the soft resin in an epoxy resin.

For the epoxy resin used in the present invention, various bisphenol resins, phenol novolac-based resins and the like are commercially available. By way of example, CY225 (tradename, made by Ciba Geigy) and the like can be used as bisphenol liquid resins. Furthermore, by way of hardners used at the same time, various acid anhydride based agents and amine-based agents are commercially available. By way of example, HY925 (tradename, made by Ciba Geigy) and the like can be used as acid anhydride based hardners.

The inorganic filler used in the present invention is used to reduce the thermal expansion coefficient of the epoxy casting material and to improve the mechanical strength such as the brittleness and toughness, and any hard inorganic flour can be used. Silica, alumina, glass beads and short glass fibers can be mentioned as examples of such inorganic fillers. In general, silica flour will often be used. But, more particularly, alumina flour will be used when the resin molding is to be used as an insulating material used in SF₆ gas. Furthermore, spherical glass beads will be used in order to reduce the viscosity of the resin, and short glass fibers will be used to improve the strength of the resin.

Furthermore, silicone gel, rubber and the like can be mentioned as the soft resins microdispersed in the epoxy resin. But silicone gel gives a preferable result in that the extent with which it increases the viscosity of the resin when it is added to an epoxy resin is lower and it is able to give a low-viscosity epoxy casting material.

Hereinafter, the explanation therefore deals with the use of silicone gel as soft resins.

By way of example, TSE3053, TSE3062 (tradenames, made by Toshiba Silicone Co.) can be used as the silicone gel. When the amount of the silicone gel included is within the range of 1 to 40 parts by weight to 100 parts by weight of epoxy resin, then the fracture toughness of the epoxy resin is improved.

Furthermore, in view of the viscosity of the epoxy casting material when it is prepared, the viscosity of the silicone gel included must be no more than 3,000 cP (centipoise). If it is more than 3,000 cP, the viscosity of the epoxy casting material will tend to be too high and the workability during molding will tend to be impaired. Thus, in order to obtain a viscosity for the epoxy casting material which does not affect the workability, it is preferable to use a silicone gel with a viscosity of no more than 1,000 cP, and particularly one with a viscosity of no more than 700 cP at room temperature.

In the present invention, an epoxy casting material for compression molding or casting is obtained by the microdispersion of silica flour which is an inorganic filler and silicone gel which is a soft particulate resin into an epoxy resin containing a hardner. Microdispersion can be achieved by stirring these mixtures at high speed. When the particle size of the soft resin particles is within the range of 0.01 to 1 µm after microdispersion, an outstanding resin molding having the improved fracture toughness is obtained.

Moreover, when the soft resin is added and stirred at high speed and microdispersed in the epoxy resin, the higher the viscosity of the resin being stirred the more substantial the shearing forces are applied to the resin during stirring and the smaller the particle size which can be obtained in the microdispersions. Thus, it is preferable to also use the inorganic filler since including an inorganic filler increases the viscosity of the epoxy resin and gives a better dispersion of the soft resin.

Thus, microdispersion is possible by high-speed stirring, but a good microdispersed state can be obtained by high-speed stirring with what can be termed a compatibilizer being added in order to facilitate the microdispersion of the soft resin. Any compatibilizer can be used which has properties such that it is provided with a hydrophilic group and a hydrophobic group in a molecule and is able to hold the interface between the hydrophilic epoxy resin and the hydrophobic silicone gel stable. Examples of such compatibilizers include polyether-modified silicone oils such as that shown in Formula (1), which is available as TSF4452 (tradename, made by Toshiba Silicone Co.).

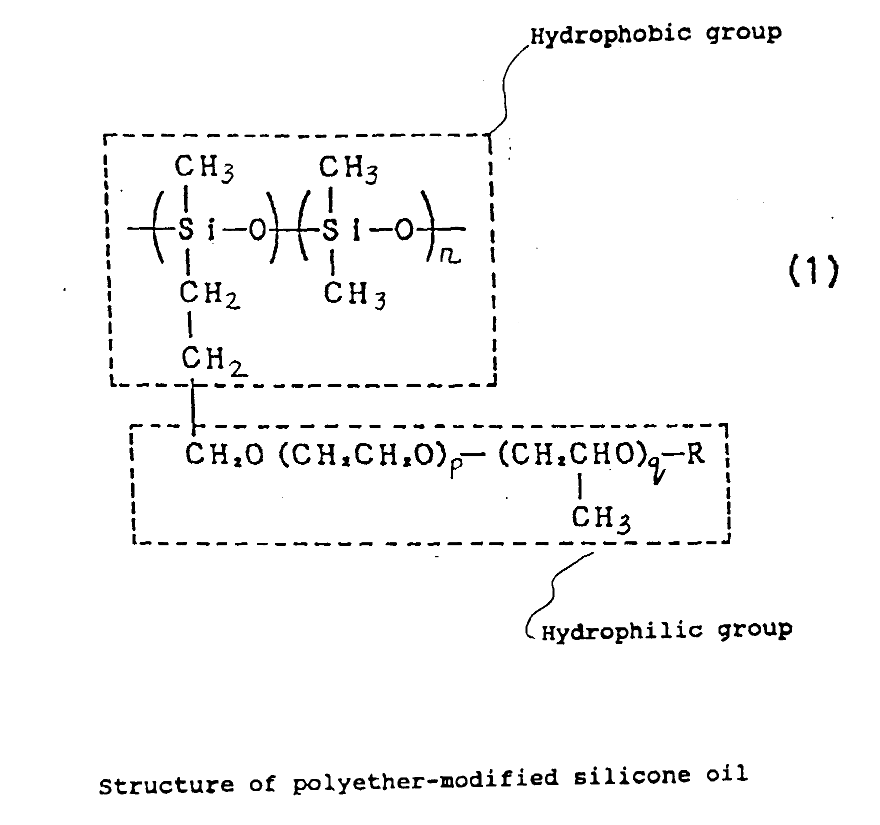

The effect of adding such a compatibilizer is directly related to the particle size of the silicone gel which is the soft resin microdispersed in the epoxy resin. The particle size of the soft resin becomes finer, the more compatibilizer is added. If the fracture toughness is to be improved, the soft resin particles have to be present in large numbers near the small portions where stresses concentrate. If effective deformation is to be achieved, the soft resin particles have to be quite small, but the advantages will no longer be exhibited if they are too small. The results of measurements of the fracture toughness reveal that, for silicone gel, the appropriate range for the particle size of the particles is 0.01 to 1 µm. Thus, the amount of compatibilizer included can be said to be the amount which is needed give a particle size of the soft resin particles in this range so as to microdisperse the soft resin particles. Generally, this will differ depending on factors such as the amount and type of the soft resin added and the performance of the compatibilizer. But those skilled in the art can easily determine the amount of the compatibilizer. In the case of polyether-modified silicone oil when using silicone gel as the soft resin, it has been found to be effective to add 5 to 20 parts by weight per 100 parts of epoxy resin by weight, at which time the fracture toughness of the resin molding was found to improve.

Furthermore, uniform dispersion becomes possible when a compatibilizer is used. As a result the viscosity of the epoxy casting material is lower than when a compatibilizer is not added. Thus, the viscosity of the epoxy casting material can be adjusted to some extent by addition of a compatibilizer.

Also, the added compatibilizer such as silicone oil spreads inside the epoxy resin and forms a waterproofing protective film at the resin surface. It is therefore possible to expect another advantage of improving the tracking properties inside the mold.

A resin molding is made in which is buried a vacuum interruptor, potential transformer or the like by using an epoxy casting material which is an epoxy resin composition made by dispersing particles of inorganic filler and soft resin in the form of fine particles in the epoxy resin as described above. The resin molding is made by injecting the epoxy casting material so obtained into the desired mold and by carrying out compression molding or casting. Casting is generally adopted when making a resin molding for high-voltage insulation. The casting is normally performed at 80 °C to 140 °C, for from 4 to 15 hours.

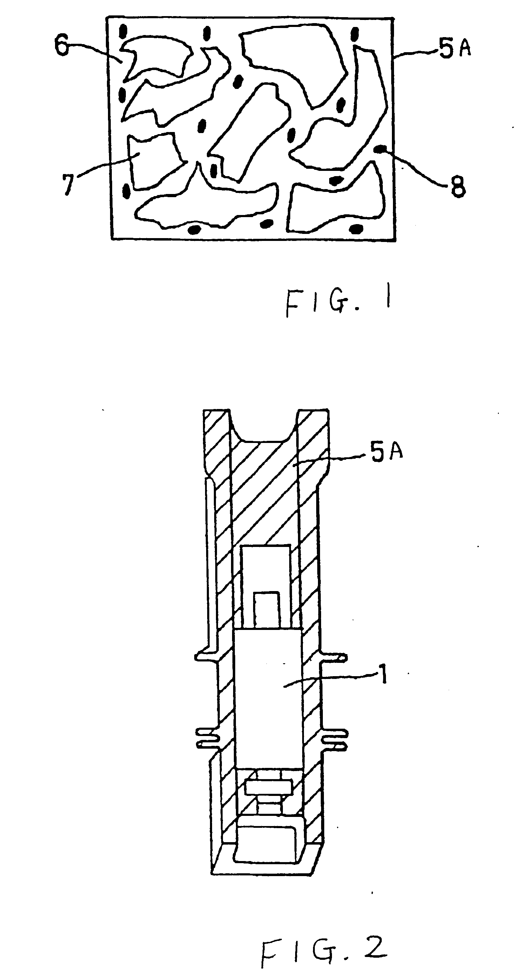

Fig. 1 is a schematic view showing the composition of an epoxy casting material according to the present invention, while Fig. 10 is a schematic view showing the composition of a conventional epoxy casting material. In Fig. 1 an casting material 5A of the present invention has a composition in which fine silicone gel particles 8 are dispersed in a conventional epoxy casting material 5 including conventional silica flour 7 and epoxy resin 6 shown in Fig. 10. Properties of epoxy casting material 5A, such as the toughness, are improved by the dispersed fine silicone gel particles 8. The following is conceivable as the reason for this.

When a component consisting of a foreign material such as a metal insert, metal conductor or vacuum interruptor is directly molded in the resin, substantial thermal stresses and residual stresses occur at the adhesion interface due to differences in the thermal expansion coefficients or the Young's moduluses. There are a large number of microscopic defects such as microscopic adhesion imperfections, voids and extraneous matters at the adhesion interface. Interface debonding and cracking will occur if substantial stresses such as thermal stresses and residual stresses are applied to these defects, and these will extend and have an effect on electrical and mechanical breakdown. Toughness is what indicates the strength of a material against such microscopic defects.

If there are fine particles of a soft resin in an epoxy resin surrounding microscopic defects in the resin molding, then a soft state is achieved in which the epoxy resin around the defect readily deforms under stress. As a result, energy occurring at fine defects - which would have been spent on the occurrence of interface debonding and cracking and extending cracks further - ends up being spent on deforming the epoxy resin around the crack, with the result that the toughness is increased as it takes more energy to extend cracks.

It should be noted that the soft particles also have to be dispersed uniformly in the form of fine particles throughout in the epoxy resin since the defects are very small and it is difficult to anticipate where they will be in the resin molding.

The present invention is described in more detail below with reference to concrete examples of this invention.

Uniform resin was prepared by mixing together 100 parts by weight of bisphenol liquid epoxy resin (trade name: CY225, made by Ciba Geigy) as epoxy resin, 80 parts by weight of acid anhydride-based hardner (trade name: HY925, made by Ciba Geigy) as hardner, and 400 parts by weight of silica flour for electrical insulation applications as inorganic filler (trade name: A1, made by Tatsumori Limited), and by adding 5 parts by weight of polyether-modified silicone oil ( trade name: TSF4452, made by Toshiba Silicone Co.) as compatibilizer, and by stirring the mixture for 1 hour. After this, an epoxy casting material was prepared wherein particles of silicone gel of particle size less than 1 µm were uniformly distributed, by adding to the thus obtained resin 15 parts by weight of silicone gel (trade name: TSE3062, viscosity 1020-1050 cP, made by Toshiba Silicone Co.) as soft resin particles, and by continuing to stir the mixture at high speed. The epoxy casting material thus obtained was poured into a mold and a resin molding was obtained by carrying out primary curing for 15 hours at 80 °C, followed by postcuring for 15 hours at 130 °C. The flexural strength, insulation breakdown voltage, volumetric resistivity, glass transition temperature, and fracture toughness of the resin moldings thus obtained were measured by the methods set out in JIS (Japanese Industrial Standard). The results are shown in Table as "Example".

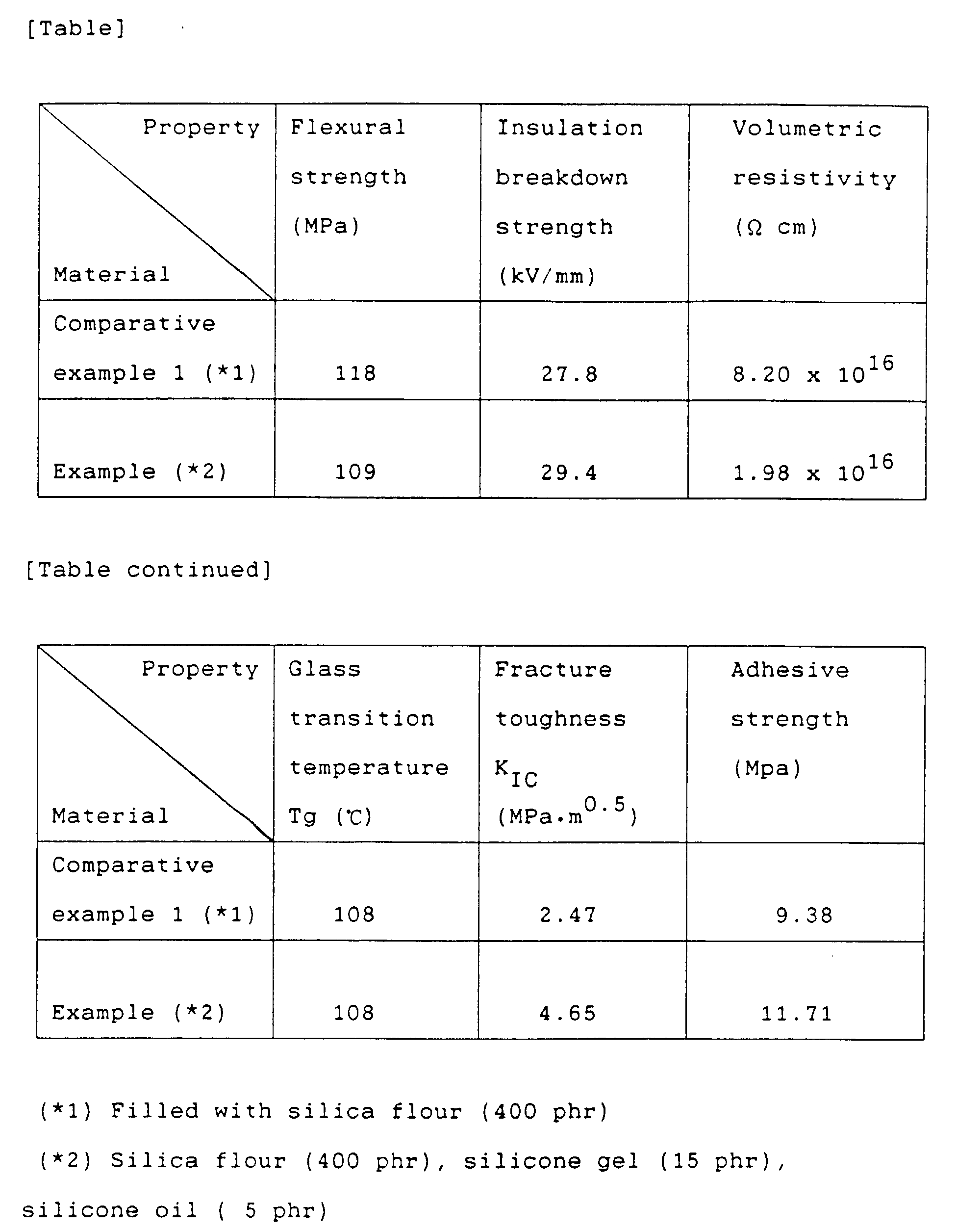

Also, for purposes of comparison, and epoxy casting material was prepared by mixing 100 parts by weight of bisphenol liquid epoxy resin (trade name: CY225 , made by Ciba Geigy) as epoxy resin, 80 parts by weight of acid anhydride-based hardner (trade name: HY925, made by Ciba Geigy) as hardner, and 400 weight parts of silica flour for electrical applications (trade name: A1, made by Tatsumori Limited) as inorganic filler, and by stirring the mixture. Then resin moldings were prepared in the same way as above, and their physical properties were determined. The results are shown in Table as "Comparative example 1." "phr" in the Table and in the Figs. indicates parts by weight per hundred parts of epoxy resin by weight.

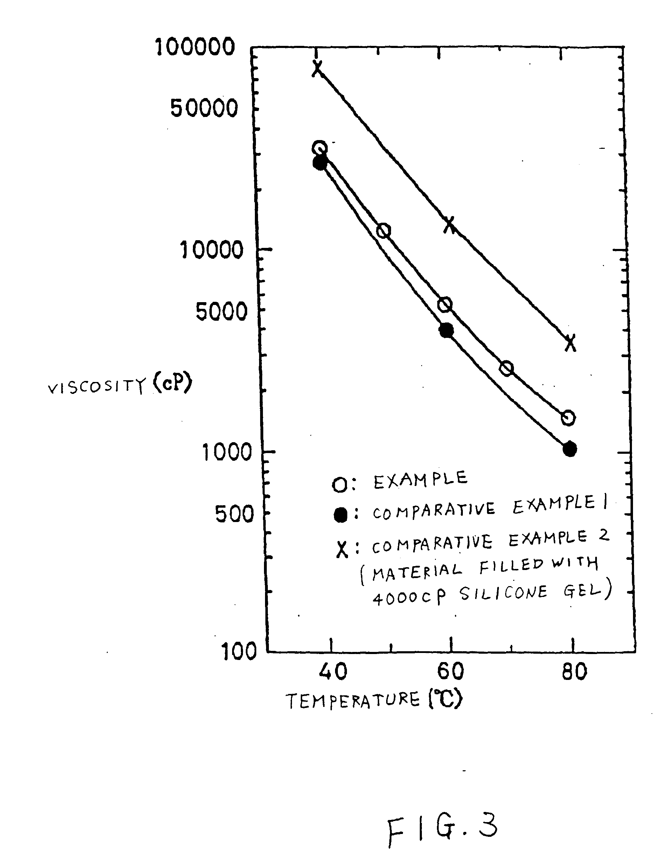

The cases where the viscosities of the silicone gels employed as soft resins were varied are considered below. Fig. 3 shows the change of viscosity with temperature for Example, Comparative example 1 and another Comparative example 2. An epoxy casting material was prepared as the Comparative example 2 by addition of 4000 cP silicone gel (trade name: TSJ3185-N, made by Toshiba Silicone Co.) as a soft resin.

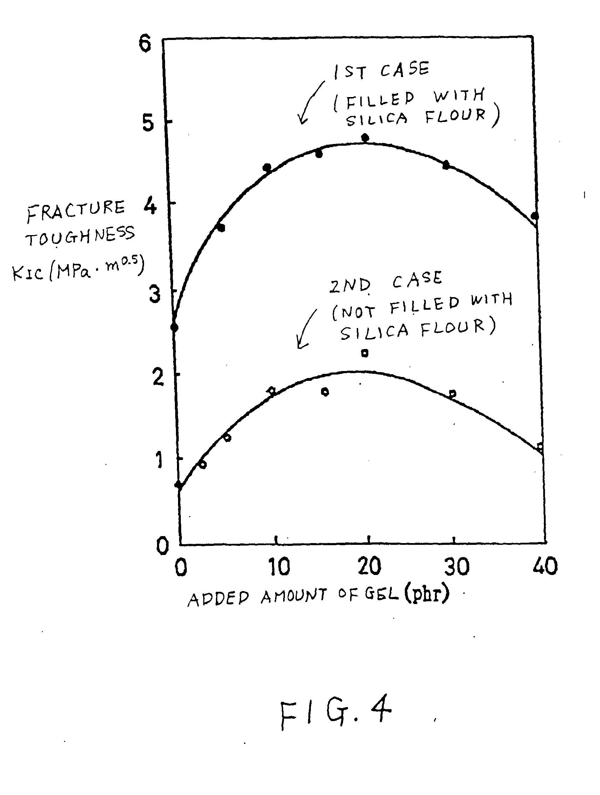

Fig. 4 shows the variation of fracture toughness for resin moldings manufactured in the same way by preparing epoxy casting material with various different additions of silicone gel in the range 0 to 40 parts by weight (trade name: TSC3062, made by Toshiba Silicone Co.) used as soft resin, for the first case where silica flour for electrical insulation applications (trade name: A1, made by Tatsumori Limited) was added in the amount of 400 parts by weight as inorganic filler, and for the second case where no such silica flour was added.

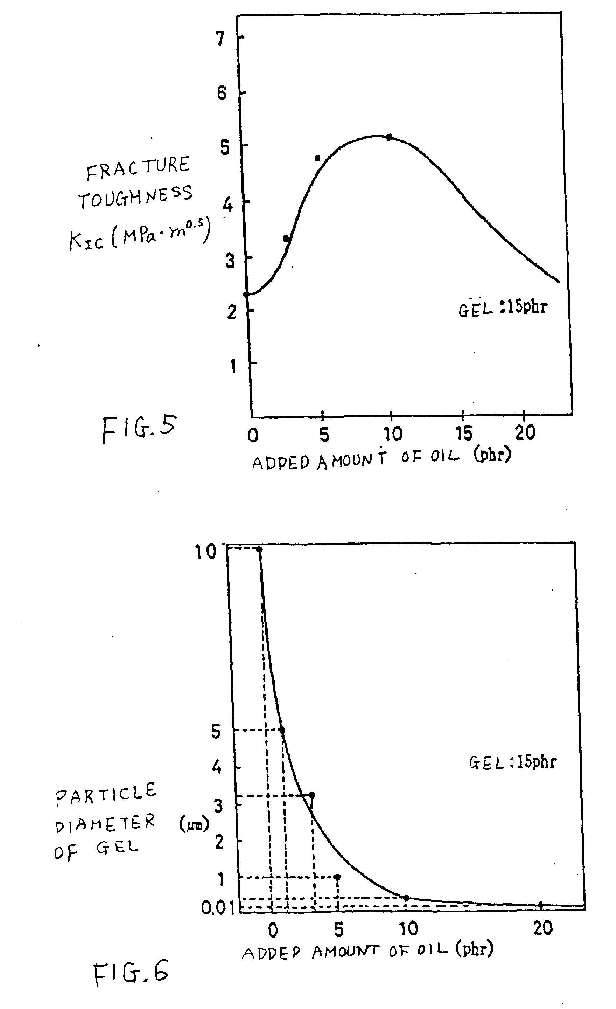

Fig. 5 shows the results in terms of change of fracture toughness of resin moldings manufactured in the same way as described above by preparing epoxy casting material with the added amount of polyether-modified silicone oil (trade name: TSF4452, made by Toshiba Silicone Co.) employed as compatibilizer varied in the range 0 to 20 parts by weight, using as soft resin 15 parts by weight of silicone gel (trade name; TSE3062, made by Toshiba Silicone Co.).

Fig. 6 shows the results obtained by measuring the particle size of the silicone gel which was microdispersed, for each added amount of polyether-modified silicone oil (trade name: TSF4452, made by Toshiba Silicone Co.).

As shown in Table, for the epoxy casting material prepared in this way shown as the example, in comparison with the conventional epoxy casting material shown as comparative example 1, while flexural strength, insulation breakdown strength, volumetric resistivity and glass transition temperature (Tg) are practically the same, fracture toughness can be greatly improved by a factor of about 2. In addition, adhesive strength is also improved by about 20%. Also, as shown in Fig. 3, the viscosity of the epoxy casting material in the case of the example is 5200 cP at 60 °C prior to curing. Thus, no great increase in viscosity is found when compared with the viscosity 4200 cP of the prior art casting material shown in the comparative example 1, in which silicone gel and silicone oil are not added. It is therefore found that there is no adverse effect on workability in the example of this invention. In the case of comparative example 2, the viscosity of the epoxy casting material is very high as shown in Fig. 3, with the result that there is adverse effect on workability.

As shown in Fig. 4, fracture toughness is increased by the addition of silicone gel. However, the maximum value of fracture toughness is displayed for the case where 20 parts of silicone gel by weight are added with respect to 100 weight parts of epoxy resin. Beyond this, fracture toughness tends to fall with increase in the amount of silicone gel added. The reason for this is thought to be that the silicone gel microdispersed in the epoxy resin makes the epoxy resin in a condition where the epoxy resin is liable to deformation, and contributes to increase the toughness of resin molding. However, as the ratio of the soft silicone gel present in the epoxy casting material increases, the soft property of the silicone gel is manifested to a greater extent, with the result that the epoxy casting material itself becomes liable to deformation, and the mechanical strength of the epoxy casting material becomes smaller than that of epoxy resin. An optimum range for the blending amount of the silicone gel therefore exists. Specifically, increase in the fracture toughness of the resin molding is seen when 1 to 40 parts by weight of silicone gel are added with respect to 100 parts by weight of epoxy resin, and approximately maximum fracture toughness is shown in the range 10 to 30 parts by weight.

Fig. 5 shows the change of fracture toughness of a resin molding in a system wherein 15 parts by weight of silicone gel are added with respect to 100 parts by weight of epoxy resin, the added amount of polyether-modified silicone oil used as the compatibilizer, being varied. A compatibilizer has an action, like that of a surfactant, for maintaining stability of the mutual interface of the respective resins, in order to facilitate the microdispersion of the silicone gel i.e. the dispersion of the silicone gel in the form of fine particles in the epoxy resin. It is therefore believed that the amount of polyether-modified silicone oil that is used greatly changes the dispersion condition of the silicone gel. Fig. 6 shows the change in the particle size of the silicone gel that is dispersed in the epoxy resin, as one index indicating the change in this dispersion condition.

As shown in Fig. 6, the particle size of the silicone gel decreases with increased added amount of polyether-modified silicone oil. In contract, as shown in Fig. 5, the value of the fracture toughness is increased by addition of polyether-modified silicone oil, showing approximately a maximum value of the fracture toughness in the vicinity of 10 parts by weight with respect to 100 parts by weight of epoxy resin, but thereafter decreases. The particle size of the silicone gel is 0.01 to 1 µm, when the fracture toughness is high i.e. when 5 to 20 parts by weight of polyether-modified silicone oil are added with respect to 100 parts by weight of epoxy resin. The reason for this is believed to be that the silicone gel assists deformation of the epoxy resin efficiently when large number of silicone gel particles are present in the neighborhood of fine stress concentration regions. For this to happen, it is believed that the particls of silicone gel must be sufficiently small, however, if they are too small, they cannot contribute to deformation of the epoxy resin. The fracture toughness of the resin molding shows practically a maximum value when the particle size of the silicone gel is 0.05 to 1 µm. Consequently, the amount of compatibilizer that is added is set such that the particle size of the silicone gel that is microdispersed in the epoxy resin is within the particle size range described above. Actually, those skilled in the art can easily determine the amount of compatibilizer that is added, based on the above-description. Even if compatibilizer is not employed, the object of this invention can be achieved by microdispersion such that the particles of the silicone gel are within the aforesaid particle size range.

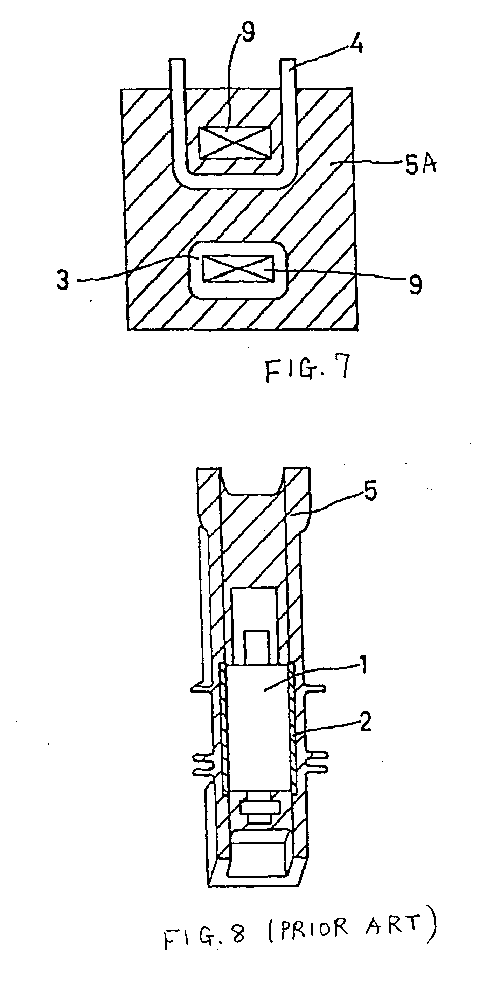

Next, a resin molding in which a vacuum interruptor was embedded and a resin molding of a potential transformer (PT) were respectively manufactured using the epoxy casting material thus prepared, by pouring this into prescribed molds, and then performing primary curing for 15 hours at 80 °C, followed by postcuring for 15 hours at 130 °C. Fig. 2 and Fig. 7 show cross-sectional views of the respective resin moldings. For comparison, resin moldings formed with cushioning layers using polyurethane in the case of a vacuum interruptor and using flexible epoxy resin in the case of a potential transformer (PT) were manufactured by the two-stage molding method, using epoxy casting material prepared without using silicone gel and polyether-modified silicone oil. Fig. 8 and Fig. 9 show the cross-sections of these respective moldings.

Next, an evaluation of reliability was conducted for the vacuum interruptor resin moldings thus obtained. The method of evaluation was that a thermal shock test in water of 1 hour at 0 °C and 1 hour at 100 °C was repeated ten times, and whether or not cracks were produced in the resin molding was then ascertained visually. As a result, the production of cracks in the resin surface was recognized after the completion of seven cycles in the case of a resin molding manufactured by the conventional two-stage molding method using the conventional epoxy casting material. However, in the case of the resin molding manufactured by direct molding using the epoxy casting material of this invention, generation of cracks was not observed, and no abnormality being found even after the completion of 10 cycles.

In the case of a resin molding of a potential transformer, the same good result was obtained as that of the vacuum interruptor resin molding with respect to the reliability test.

In addition, a partial discharge test was conducted for the vacuum interruptor molding of this invention after completion of 10 cycles of the thermal shock test in water. This test was performed by applying AC voltage with the discharge charge at the commencement of corona generation being 1 pC (pico-coulomb). With the vacuum interruptor resin molding of this invention, partial discharge did not take place even on application of 50 kV AC voltage, and the corona-proof characteristic was maintained.

Although in this embodiment the case was described where silicone gel TSE3062 of viscosity 1020 - 1050 cP was employed, better results are obtained if TSE3053 (trade name, made by Toshiba Silicone Co.) of viscosity 700 cP is employed.

According to this invention, an epoxy resin composition is obtained as described above, which can be used by direct molding, not by two-stage molding, for making a resin molding. The resin molding which is directly molded using this epoxy resin composition has improved properties such as brittleness, so the debonding at the interface and cracking of the resin due to thermal stresses do not occur.
Furthermore, this resin molding has an improved cracking resistance in that interface debonding and cracking do not occur, an outstanding long-term reliability in terms of its resistance to heat cycle and the like, and an outstanding electrical properties in terms of its resistance to partial discharge and the like. In addition, the resin molding is directly molded using the epoxy resin composition according to this invention, so that the workability in the manufacture thereof is greatly improved compared with the conventional two-stage molding.

In embodiments of the invention the compatibilizer can be regarded as a stabiliser or a stabilising dispersant.

## Claims

1. An epoxy resin composition, comprising:
an epoxy resin;
an inorganic filler;
a soft resin having a particle size from 0.01 to 1.0µm; and
a compatibilizer;
particles of said inorganic filler and said soft resin being uniformly dispersed in the form of fine particles in said epoxy resin.

2. The epoxy resin composition according to Claim 1:
wherein the viscosity of the soft resin is less than 3,000 cP.

3. The epoxy resin composition according to Claim 1:
wherein said soft resin includes a silicone gel.

4. The epoxy resin composition according to Claim 3:
wherein an amount of said silicone gel is 1 to 40 parts by weight with respect to 100 parts of said epoxy resin by weight.

5. The epoxy resin composition according to Claim 1:
wherein said compatibilizer includes a polyether-modified silicone oil.

6. The epoxy resin composition according to Claim 5:
wherein an amount of said polyether-modified silicone oil is 5 to 20 parts by weight with respect to 100 parts of said epoxy resin by weight.

7. The epoxy resin composition according to any one of claims 2 to 6 wherein the viscosity of the soft resin is no more than 1,000 cP.

8. The epoxy resin composition according to claim 7 wherein the viscosity is no more than 700 cP at room temperature.

9. A resin moulding, comprising:
an epoxy resin composition, including,
an epoxy resin,
an inorganic filler,
a soft resin having a particle size from 0.01 to 1.0µm, and
a compatibilizer,
particles of said inorganic filler and said soft resin being uniformly dispersed in the form of fine particles in said epoxy resin; and
a component buried in said epoxy resin composition.

10. A resin moulding as claimed in claim 9, wherein the epoxy resin composition is as defined in any one of claims 2 to 8.

11. A resin moulding, according to Claim 9 or 10:
wherein said component includes a vacuum interruptor.

12. A resin moulding, according to Claim 9 or 10:
wherein said component includes a potential transformer.

## Patentansprüche

1. Eine Epoxidharzzusammensetzung, mit:
einem Epoxidharz;
einem anorganischen Füllstoff;
einem Weichharz, das eine Partikelgröße von 0.01 bis 1.0 um aufweist; und
einem Vermittler;
wobei Partikel des genannten anorganischen Füllstoffes und des genannten Weichharzes in der Form feiner Partikel in dem genannten Epoxidharz gleichmäßig fein verteilt sind.

2. Die Epoxidharzzusammensetzung nach Anspruch 1:
wobei die Viskosität des Weichharzes weniger als 3000 cP beträgt.

3. Die Epoxidharzzusammensetzung nach Anspruch 1:
wobei das genannte Weichharz ein Silikongel aufweist.

4. Die Epoxidharzzusammensetzung nach Anspruch 3:
wobei eine Menge des genannten Silikongeles 1 bis 40 Gewichtsteile bezogen auf 100 Gewichtsteile des genannten Epoxidharzes beträgt.

5. Die Epoxidharzzusammensetzung nach Anspruch 1:
wobei der genannte Vermittler ein polyäther-modifiziertes Silikonöl aufweist.

6. Die Epoxidharzzusammensetzung nach Anspruch 5:
wobei eine Menge des genannten polyäther-modifizierten Silikonöles 5 bis 20 Gewichtsteile bezogen auf 100 Gewichtsteile des genannten Epoxidharzes beträgt.

7. Die Epoxidharzzusammensetzung nach einem der Ansprüche 2 bis 6, wobei die Viskosität des Weichharzes nicht mehr als 1000 cP beträgt.

8. Die Epoxidharzzusammensetzung nach Anspruch 7, wobei die Viskosität nicht mehr als 700 cP bei Raumtemperatur beträgt.

9. Eine Harzformmasse, mit:
einer Epoxidharzzusammensetzung, die aufweist
ein Epoxidharz,
einen anorganischen Füllstoff,
ein Weichharz, das eine Partikelgröße von 0.01 bis 1.0 µm aufweist, und
einen Vermittler,
wobei Partikel des genannten anorganischen Füllstoffes und des genannten Weichharzes in Form feiner Partikel in dem genannten Epoxidharz gleichmäßig fein verteilt sind; und
einem Bauteil, das in die genannte Epoxidharzzusammensetzung eingebettet ist.

10. Eine Harzformmasse nach Anspruch 9, wobei die Epoxidharzzusammensetzung eine der in einem der Ansprüche 2 bis 8 definierte Epoxidharzzusammensetzung ist.

11. Eine Harzformmasse nach Anspruch 9 oder 10:
wobei das genannte Bauteil einen Vakuumunterbrecher aufweist.

12. Eine Harzformmasse nach Anspruch 9 oder 10:
wobei das genannte Bauteil einen Spannungswandler aufweist.

## Revendications

1. Composition de résine époxyde comprenant :
une résine époxyde ;
une charge inorganique ;
une résine molle ayant une granulométrie comprise entre 0,01 et 1 µm ; et
un agent de compatibilisation ;
les particules de ladite charge inorganique et de ladite résine molle étant uniformément dispersées sous forme de fines particules dans ladite résine époxyde.

2. Composition de résine époxyde selon la revendication 1, dans laquelle la viscosité de la résine molle est inférieure à 3000 cP.

3. Composition de résine époxyde selon la revendication 1, dans laquelle ladite résine molle comprend un gel silicone.

4. Composition de résine époxyde selon la revendication 3, dans laquelle une quantité dudit gel silicone est de 1 à 40 parties en poids, pour 100 parties en poids de ladite résine époxyde.

5. Composition de résine époxyde selon la revendication 1, dans laquelle ledit agent de compatibilisation comprend une huile silicone modifiée par un polyéther.

6. Composition de résine époxyde selon la revendication 5, dans laquelle une quantité de ladite huile silicone modifiée par un polyéther est de 5 à 20 parties en poids, pour 100 parties en poids de ladite résine époxyde.

7. Composition de résine époxyde selon l'une quelconque des revendications 2 à 6, dans laquelle la viscosité de la résine molle n'excède pas 1000 cP.

8. Composition de résine époxyde selon la revendication 7, dans laquelle la viscosité n'excède pas 700 cP à température ambiante.

9. Masse à mouler en résine comprenant :
une composition de résine époxyde comprenant
une résine époxyde,
une charge inorganique,
une résine molle ayant une granulométrie comprise entre 0,01 à 1 µm, et
un agent de compatibilisation,
les particules de ladite charge inorganique et de ladite résine molle étant uniformément dispersées sous forme de fines particules dans ladite résine époxyde, et
un composant noyé dans ladite composition de résine époxyde.

10. Masse à mouler en résine selon la revendication 9, dans laquelle la composition de résine époxyde est telle que définie dans l'une quelconque des revendications 2 à 8.

11. Masse à mouler en résine selon la revendication 9 ou 10, dans laquelle ledit composant comprend un interrupteur sous vide.

12. Masse à mouler en résine selon la revendication 9 ou 10, dans laquelle ledit composant comprend un transformateur de tension.
